# FASCICULE DE BREVET EUROPEEN

(11) **EP 1 862 073 B1**
(45) Date de publication et mention de la délivrance du brevet: **05.11.2008**
(21) Numéro de dépôt: 07364007.0
(22) Date de dépôt: 10.05.2007
(51) Int. Cl.: A22B 5/20

(54) **Procédé et outil de découpe de l'abdomen et du sternum d'un animal**
Verfahren und Vorrichtung zum Durchtrennen des Zwerchfells und Brustkorbs eines Tieres
Method and device for cutting through midriff and chest of an animal

(30) Priorité: 01.06.2006 FR 0604875
(43) Date de publication de la demande: 05.12.2007
(73) Titulaire: Couedic Madore Equipement, 22210 Plemet (FR)
(72) Inventeur: Le Maux, Robert, 22600 Loudeac (FR); Le Guennec, Laurent, 56500 Plumelin (FR)
(74) Mandataire: Bentz, Jean-Paul

(56) Documents cités:
- WO-A-00/18244
- WO-A-93/01725
- AU-B2- 573 603
- DE-B3-6102004 022 34

## Description

La présente invention concerne un procédé et un outil de découpe d'un animal après abattage. L'invention concerne plus particulièrement un procédé et un outil de découpe du sternum et de la paroi de l'abdomen d'un animal suspendu par les pattes arrières, en particulier d'un porc.

Il est connu, notamment par le document brevet EP 594 791, un procédé de découpe de la paroi de l'abdomen et du sternum d'un animal suspendu par les pattes arrières, sans altérer les viscères et les organes, notamment le coeur. Le procédé consiste à réaliser une prédécoupe de la paroi de l'abdomen entre les pattes arrières, à poursuivre la découpe de la paroi de l'abdomen vers le bas avec une lame circulaire, en poussant la paroi vers l'extérieur et en maintenant les intestins dégager de ladite paroi au moyen d'une broche ou doigt, puis à poursuivre la découpe vers le bas pour découper la poitrine et le sternum. L'outil de découpe comprend une lame circulaire et une broche montée pivotante selon l'axe de rotation de la lame entre une position basse verticale active et une position rétractée.

La prédécoupe au niveau des pattes arrières peut être réalisée au moyen de la lame, avec la broche en position rétractée. La lame doit ensuite être reculée entièrement de la prédécoupe pour faire pivoter la broche dans sa position basse verticale avant d'effectuer la découpe de la paroi de l'abdomen. Suite au retrait de la lame hors de la prédécoupe, l'animal peut osciller et empêcher la réinsertion de l'outil dans la prédécoupe. En outre ces déplacements de la lame augmentent le temps de découpe de chaque animal. Une autre solution consiste à effectuer la prédécoupe lors d'une opération préalable au moyen d'un autre outil. Dans ce cas, la prédécoupe doit être réalisée sur une hauteur très précise, pour que la lame puisse y être insérée avec sa broche en position basse verticale.

Le but de la présente invention est de proposer une solution visant à pallier les inconvénients précités, qui permette de réaliser des découpes de l'abdomen et du sternum d'animaux, en particulier de porcs, sans détériorer les viscères, et notamment, qui ne nécessite pas de prédécoupe précise au niveau des pattes arrières et qui soit adaptée aux cadences rapides de traitement des carcasses d'animaux dans les abattoirs.

A cet effet, la présente invention a pour objet un procédé de découpe du sternum et de la paroi de l'abdomen d'un animal abattu suspendu par les pattes arrières, en particulier d'un porc, comprenant les étapes successives suivantes :
a) réalisation d'une découpe du sternum au dessus du coeur, sensiblement selon le plan de symétrie de l'animal au moyen d'une lame circulaire d'un outil de découpe,
b) descente de la lame circulaire vers le bas pour poursuivre la découpe du sternum jusqu'à la trachée, en contournant le coeur, ce dernier pouvant éventuellement être découpé partiellement par la lame,
c) remontée de la lame circulaire dans la découpe réalisée aux étapes a) et b),
d) insertion d'un doigt de l'outil de découpe entre le bord de coupe de la lame circulaire et le coeur de l'animal, sans emporter le coeur, en poussant ce dernier vers l'intérieur, et perforation du péritoine par l'extrémité libre dudit doigt,
e) mise sous tension de la paroi abdominale par ledit doigt en reculant l'outil de découpe, et
f) remontée de l'outil de découpe pour la découpe par la lame circulaire de la paroi abdominale mise sous tension par ledit doigt.

Selon l'invention, on effectue une découpe du sternum de haut en bas, puis on découpe la paroi de l'abdomen de bas en haut, après insertion du doigt pour perforer le péritoine et tendre la paroi de l'abdomen vers l'extérieur. En procédant ainsi de bas en haut pour découper la paroi de l'abdomen, la prédécoupe de la paroi de l'abdomen au niveau des pattes arrières de manière précise n'est plus nécessaire, celle-ci pouvant être effectuée manuellement sur une hauteur quelconque. La remontée de l'outil lors de l'étape f) permet de préférence de terminer la découpe de la pointe du sternum commencée à l'étape a), avant de commencer la découpe de la paroi de l'abdomen.

L'invention a également pour objet un outil de découpe de la paroi de l'abdomen et du sternum d'un animal suspendu par les pattes arrières pour la mise en oeuvre du procédé décrit précédemment, caractérisé en ce qu'il comprend
- une lame circulaire montée en rotation à une première extrémité longitudinale d'un support, ledit support étant destiné à être fixé sur un système de déplacement par sa deuxième extrémité longitudinale, et
- un doigt assemblé sur un bras de pivotement monté pivotant sur ledit support autour d'un axe de pivotement disposé entre la deuxième extrémité du support et l'axe de rotation de la lame circulaire, parallèlement et à distance de ce dernier, de sorte que ledit doigt soit disposé sensiblement selon le plan de la lame circulaire au-delà de son bord de coupe et déplaçable par pivotement dudit bras de pivotement entre une position basse rétractée et une position haute active dans laquelle ledit doigt est apte à perforer le péritoine de l'animal par son extrémité libre, avant l'opération de découpe de bas en haut de la paroi de l'abdomen par la lame circulaire, et à tendre la paroi de l'abdomen par son bord d'appui en vis-à-vis du bord de coupe de la lame lors de ladite opération de découpe de bas en haut.

Selon l'invention, l'axe de pivotement du doigt est décalé par rapport à l'axe de rotation de la lame de sorte que le doigt reste au plus proche de la lame lors de son passage de sa position basse vers la position haute active, ceci afin de permettre l'insertion du doigt dans la découpe sans emporter le coeur, tout en maintenant la lame partiellement dans la découpe. L'axe de pivotement est le plus éloigné possible de l'axe de rotation pour limiter au maximum l'encombrement du doigt et permettre son passage entre le coeur et le bord de coupe.

Dans le cas d'un axe de pivotement selon l'axe de rotation de la lame, il serait nécessaire de sortir complètement la lame de la découpe pour permettre le pivotement du doigt vers sa position active sans emporter le coeur, avec le risque de ne pas récupérer la découpe pour l'insertion ultérieure du doigt et de la lame. De plus, ces déplacements supplémentaires de l'outil entraîneraient une augmentation du temps de traitement de chaque animal.

Selon une particularité, l'axe de pivotement est situé au-delà du bord de coupe de la lame circulaire et/ou à distance de l'axe longitudinal du support.

Selon une autre particularité, le bord d'appui du doigt est muni d'une fente longitudinale apte à recevoir un secteur du bord de coupe de la lame circulaire dans la position haute active du doigt.

Selon une autre particularité, l'extrémité libre du doigt est disposée au dessus de l'axe longitudinal du support dans la position haute active du doigt, évitant ainsi une inclinaison excessive de l'outil pour la réalisation des étapes d) à f). La longueur du doigt et l'écartement de son extrémité libre par rapport au bord de coupe de la lame dans la position haute active sont définis pour permettre le percement du péritoine et la mise sous tension de la paroi de l'abdomen.

Selon un mode de réalisation, le bras de pivotement comprend une première barre montée pivotante par une première extrémité sur le support et s'étendant d'un côté de la lame parallèlement au plan de la lame, et une deuxième barre montée à la deuxième extrémité de la première barre, disposée sensiblement selon le plan de la lamelame et portant à son extrémité libre le doigt, ledit outil comprenant en outre des moyens de déplacement agissant sur la première barre pour déplacer automatiquement le doigt entre ses deux positions, lesdits moyens étant par exemple formés d'un vérin dont le cylindre est monté articulé sur le support, l'extrémité libre du piston étant monté articulé à ladite première barre. Avantageusement, la deuxième barre présente un bord concave venant en vis-à-vis du bord de coupe de la lame dans la position haute active du doigt.

Selon une autre particularité, l'outil de découpe comprend en outre des moyens de positionnement comprenant deux bras de positionnement montés sur ledit support et aptes à venir entre les pattes avants d'un animal pour les écarter et centrer l'animal par rapport au plan de la lame circulaire. Dans un mode de réalisation, lesdits bras de positionnement sont montés pivotant sur ledit support et sollicités élastiquement vers leur position active par des moyens de rappel élastique, des moyens de commande, par exemple de type vérin, étant aptes à déplacer lesdits bras de positionnement à l'encontre desdits moyens de rappel élastique vers une position rétractée.

L'invention a également pour objet un dispositif de découpe de la paroi de l'abdomen et du sternum d'un animal suspendu par les pattes arrières, caractérisé en ce qu'il comprend un outil de découpe tel que décrit précédemment et un système de déplacement comprenant un robot de type six axes sur lequel est monté ledit outil de découpe.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence aux dessins schématiques annexés, sur lesquels :
- la figure 1 représente une vue de côté d'un outil de découpe selon l'invention, son doigt en position rétractée ;
- la figure 2 représente une vue analogue à la figure 1, le doigt en position active ;
- les figures 3 et 4 représentent respectivement des vues schématiques partielles de devant et de dessus de l'outil de découpe ;
- les figures 5a et 5b représentent des vues partielles agrandies selon les plans de coupe Va et Vb de la figure 2 illustrant le positionnement du bord de coupe de la lame par rapport respectivement au doigt et au bras de pivotement dudit doigt ;
- la figure 6 représente une vue schématique de côté d'un porc suspendu par les pattes arrières illustrant les découpes à réaliser par l'outil de découpe ;
- les figures 7A à 7J représentent différentes positions de l'outil de découpe lors de l'opération de découpe d'un porc ; et,
- la figure 8 représente une vue agrandie partielle de l'opération de découpe de la figure 7G, illustrant la zone gagnée par un axe de pivotement du bras du doigt décalé par rapport à l'axe de rotation de la lame circulaire.

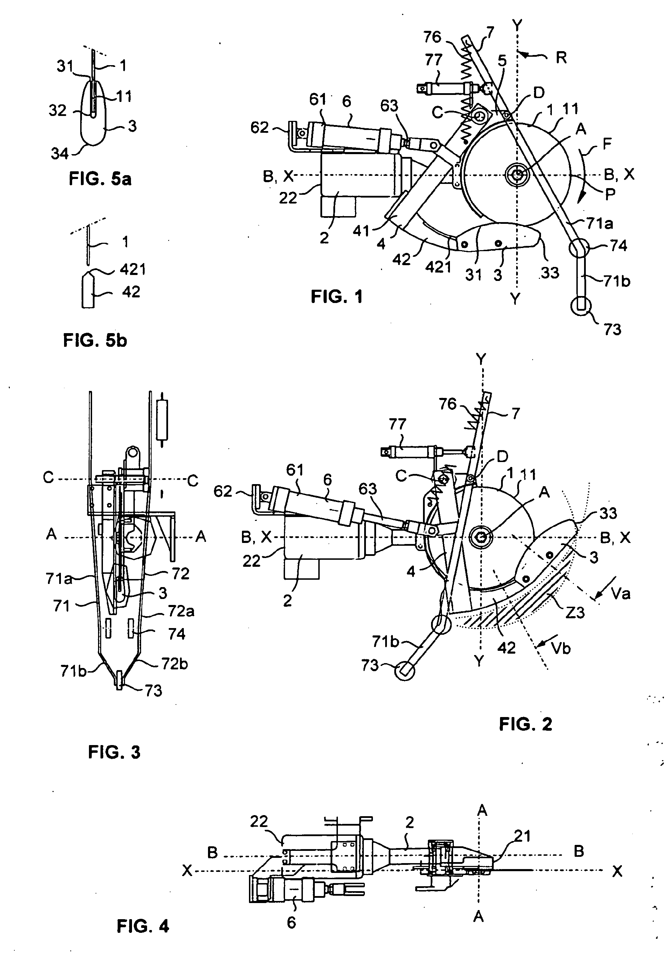

En référence aux figures 1 et 4, l'outil de découpe selon l'invention comprend une lame circulaire 1, formée d'un disque, montée rotative à une première extrémité longitudinale 21 d'un support 2 autour d'un axe de rotation A. La lame est apte à être entrainée en rotation de manière classique par des moyens d'entraînement (non représentés) dans le sens de rotation horaire sur la figure 1, tel qu'illustré par la flèche F. Le support, d'axe longitudinal B perpendiculaire à l'axe de rotation A et disposé horizontalement sur la figure 1, est destiné à être monté par sa deuxième extrémité longitudinale 22 opposée à la lame sur un système de déplacement assurant le déplacement dans l'espace de l'unité de découpe.

L'outil comprend en outre un doigt 3 assemblé sur un bras de pivotement 4. Le bras comprend une première barre 41 montée pivotante par une première extrémité sur le support autour d'un axe de pivotement C parallèle à l'axe de rotation A, et une deuxième barre 42, montée à la deuxième extrémité de la première barre, qui porte à son extrémité libre le doigt. Cet axe de pivotement C est disposé entre l'extrémité longitudinale 22 du support et l'axe de rotation A de la lame, en étant décalé par rapport à ce dernier.

Considérant les secteurs angulaires de la lame définis par le repère orthogonal R de la figure 1, formé par un axe horizontal X et un axe vertical Y perpendiculaires à l'axe de rotation A et passant par le point d'intersection entre ledit axe de rotation et le plan de la lame, l'axe X étant orienté selon l'axe B, l'axe de pivotement C est disposé dans le secteur angulaire compris entre 270° et 0°, de préférence bornes non incluses, mieux encore entre 280 et 350°, par exemple de l'ordre de 330°. L'axe de pivotement C est disposé au-delà du bord de coupe 11 de la lame. Dans le présent mode de réalisation, un carter de protection 5 monté sur le support protège le bord de coupe de la lame, par exemple sur un secteur compris entre 225° et 0° selon le repère R. La première barre 41 du bras de pivotement est montée pivotante sur ledit carter au-delà du bord de coupe et s'étend d'un côté de la lame parallèlement au plan de la lame. La deuxième barre 42 du bras et le doigt 3 allongé sont disposés sensiblement selon le plan de la lame. Le doigt est disposé au-delà du bord de coupe de la lame et présente un bord dit d'appui 31 orienté vers le bord de coupe. Le bord d'appui présente en section longitudinale une forme convexe, tel que visible sur la figure 1. Ce bord d'appui présente également en section transversale une forme convexe, tel que visible sur la figure 5a, et constitue une surface d'appui de forme et de longueur appropriées pour venir contre la surface interne de la paroi abdominale lors de sa découpe tel que décrit ci-après. Le bord d'appui est muni d'une fente longitudinale 32 s'étendant sur toute la longueur du doigt pour recevoir le bord de coupe de la lame circulaire. Le doigt présente un bord extérieur 34 ayant en section transversale une forme convexe servant notamment de surface d'appui pour pousser les viscères et le coeur lors des découpes.

L'outil est équipé de moyens de déplacement du bras de pivotement pour déplacer le doigt entre une position basse rétractée et une position haute active. Ces moyens sont formés d'un vérin 6, dont le cylindre 61 est assemblé articulé sur une pièce de montage 62 qui est fixée au niveau de l'extrémité 22 du support, et dont l'extrémité libre du piston 63 est articulée sur la première barre 41, les axes d'articulation du vérin étant parallèles aux axes A et C.

En référence à la figure 1, le doigt dans sa position basse rétractée est disposé sous la lame circulaire. Son extrémité libre 33 est disposée en retrait par rapport au point P du bord de coupe situé à l'opposé de l'extrémité 22 et à 90° dans le repère R. L'extrémité libre 33 est disposée dans le repère R à un angle supérieur ou égale à 135°, par exemple de l'ordre de 160°. Le bord de coupe 11 peut être légèrement inséré dans la fente 32, par exemple sur un secteur angulaire d'une dizaine de degrés de part et d'autre de l'axe Y. La barre principale 41 forme un angle d'environ 45° avec l'axe Y.

Le pivotement du bras autour de son axe C dans le sens antihoraire par commande du vérin permet d'amener le doigt dans sa position haute active illustrée à la figure 2. Dans cette position active, l'extrémité libre 33 du doigt est située au dessus des axes B et X, par exemple à un angle de 70-75° dans le repère R. Environ une moitié de son bord d'appui 31 est disposée au-delà du bord de coupe 11 de la lame. Le bord de coupe est logé dans la portion de fente située sur l'autre moitié du bord d'appui, en dessous du point P, par exemple sur le secteur angulaire du repère R allant de 95 à 140°. Tel qu'illustré sur les figures 2 et 5b, la deuxième barre 42 présente un bord concave 421 venant se disposer en vis-à-vis du bord de coupe, à faible distance de ce dernier, lorsque le doigt est dans une position active du doigt, de manière à éviter un blocage des os du sternum entre la barre et la lame lors de la remontée de l'outil. Le doigt comporte une extrémité libre 33 suffisamment pointue pour percer le péritoine lors du pivotement du doigt vers sa position haute active.

L'outil comprend en outre des moyens de positionnement 7 permettant d'écarter les pattes avant de l'animal et de centrer l'animal par rapport à l'outil de découpe. En référence aux figures 1 et 3, ces moyens de positionnement comprennent deux bras de positionnement 71 et 72 montés pivotant sur le support autour d'un axe de pivotement D parallèle aux axes A et C. Les bras de positionnement présentent des parties principales 71a, 72a qui s'étendent symétriquement de part et d'autre de la lame circulaire et qui se prolongent par des parties inférieures inclinées 71b, 72b s'étendant en direction du plan de la lame. Les parties inférieures sont reliées entre elles en extrémité par un axe portant une roue principale 73 disposée selon le plan de la lame. Chaque bras porte en outre une roue intermédiaire 74 montée rotative au niveau de la jonction entre sa partie principale et sa partie inférieure, les roues intermédiaires étant disposées de part et d'autre du plan de la lame, en dessous du bras de pivotement et du doigt pour permettre le déplacement de ce dernier entre ses deux positions. L'axe de pivotement D des bras de positionnement est monté sur le carter 5, par exemple à environ 350° dans le repère R. Les bras de positionnement sont sollicités élastiquement vers une position active illustrée à la figure 1 par des moyens de rappel élastique 76, de type ressort de traction, montés entre le carter 5 et les parties principales des bras, en un point situé au dessus de l'axe D. Les bras de positionnement peuvent en outre être déplacés au moyen d'un vérin de commande 77 vers une position rétractée illustrée à la figure 2. Le cylindre du vérin de commande est monté articulé sur le carter via une pièce de montage et l'extrémité libre de son piston est apte à venir en butée contre une traverse reliant les parties principales des bras au-dessus de l'axe de pivotement D pour déplacer lesdits bras vers leur position rétractée. Dans la position active, les parties inférieures sont disposées sensiblement parallèlement à l'axe Y, soit sensiblement verticalement sur la figure 1, la roue principale et les roues intermédiaires étant situées au delà du point P du bord de coupe et en dessous de la lame et du doigt en position haute ou basse. Le pivotement des bras de positionnement autour de leur axe D, par commande du vérin 77, permet de les amener vers leur position rétractée. Dans cette position rétractée, les parties inférieures sont inclinées vers l'extrémité 22 du support, et les roues sont disposées dans le repère R à un angle supérieur à 180°, soit à gauche de l'axe Y sur la figure 2.

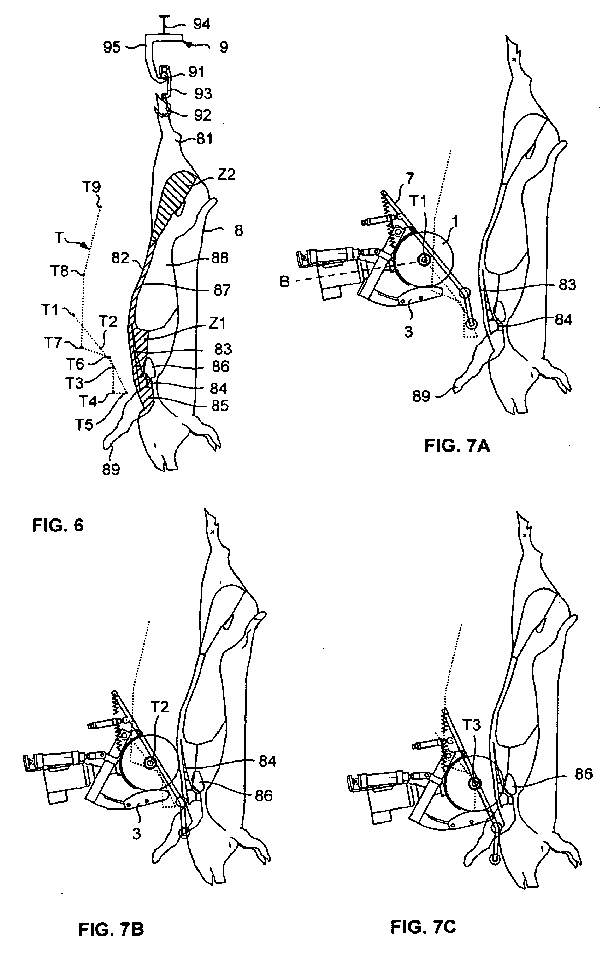

Suivant la figure 6, l'outil de découpe selon l'invention est destiné au traitement de carcasses de porc 8 se déplaçant le long du rail 91 d'un convoyeur aérien 9. Bien entendu, l'invention n'est pas limitée au traitement de cet animal et peut s'appliquer à d'autres animaux de boucherie, notamment aux bovins. Les porcs abattus sont suspendus au rail 91 par les pattes arrières 81 au moyen de crochets de suspension 92 solidaires de chariots de roulement 93, lesdits chariots étant engagés sur le rail et entraînés le long de ce dernier par des entraîneurs (non représentés) montés à intervalle régulier sur une chaîne sans fin. Le rail est suspendu à des éléments de charpente 94 du bâtiment, tels que des poutres en I, par l'intermédiaire de chaises support 95 disposées à intervalle régulier. L'outil de découpe est monté sur un système de déplacement, en particulier à l'extrémité du bras d'un robot six axes de type connu. Le système de déplacement est disposé latéralement, de préférence au niveau d'un tronçon rectiligne du convoyeur 9, les animaux étant suspendus de sorte que leur abdomen 82 soit disposé en vis-à-vis de l'outil de découpe. Les mouvements du bras sont commandés par un calculateur paramétrable, de sorte que l'outil de découpe puisse se déplacer en synchronisme avec le déplacement des animaux suspendus. L'outil de découpe est déplacé parallèlement au rail, depuis une position d'attente, en synchronisme avec un animal pour le découper, puis est ramené en arrière vers sa position d'attente pour la découpe de l'animal suivant.

Le trajet T suivi par l'axe de rotation A de la lame est représenté en traits discontinus sur la figure 6. Des positions caractéristiques de ce trajet sont référencées de T1 à T9. Les découpes effectuées lors de ce trajet sont représentées par la zone hachurée Z1 sur la figure 6, ces découpes comprennent la découpe de la poitrine 83 avec le sternum 84 et de la gorge 85 pour dégager la trachée, et la découpe de la paroi de l'abdomen 82 avec le péritoine 87 qui enveloppe les viscères 88, à l'exception de la partie de la paroi l'abdomen située entre les pattes arrières 81. La zone hachurée Z2 correspond à une prédécoupe de cette partie de la paroi abdominale située entre les pattes arrières, qui est réalisée lors d'une étape de traitement préalable.

Une description du procédé de découpe du sternum et de l'abdomen d'un porc va à présent être effectuée en référence aux figures 7A à 7J.

Dans la position d'attente T1 illustrée à la figure 7A, l'outil de découpe est disposé latéralement et à distance des animaux 8 transportés par le convoyeur 2. L'axe du support B est légèrement incliné par rapport à l'horizontale, d'environ 15°, de sorte que les parties inférieures des bras de positionnement en position active soient disposées sensiblement parallèlement au sternum 84, les roues au dessus des pattes avants 89 des porcs et à distance de leur poitrine. L'axe de rotation de la lame est disposé légèrement au-dessus de l'extrémité arrière (xiphoïde) du sternum. Le doigt est en position basse rétractée.

Lorsqu'un animal est détecté en vis-à-vis de l'outil, l'outil est déplacé vers le bas en direction de l'animal, tout en suivant l'avancement de l'animal sur le convoyeur, jusqu'à la position T2 illustrée à la figure 7B. Dans cette position T2, les parties inférieures des bras sont disposées entre les pattes avants pour les écarter et permettre de centrer l'animal par rapport au plan de la lame. Les roues intermédiaires sont en butée contre la poitrine, sensiblement au niveau de l'extrémité avant du sternum, la roue principale venant contre la mâchoire.

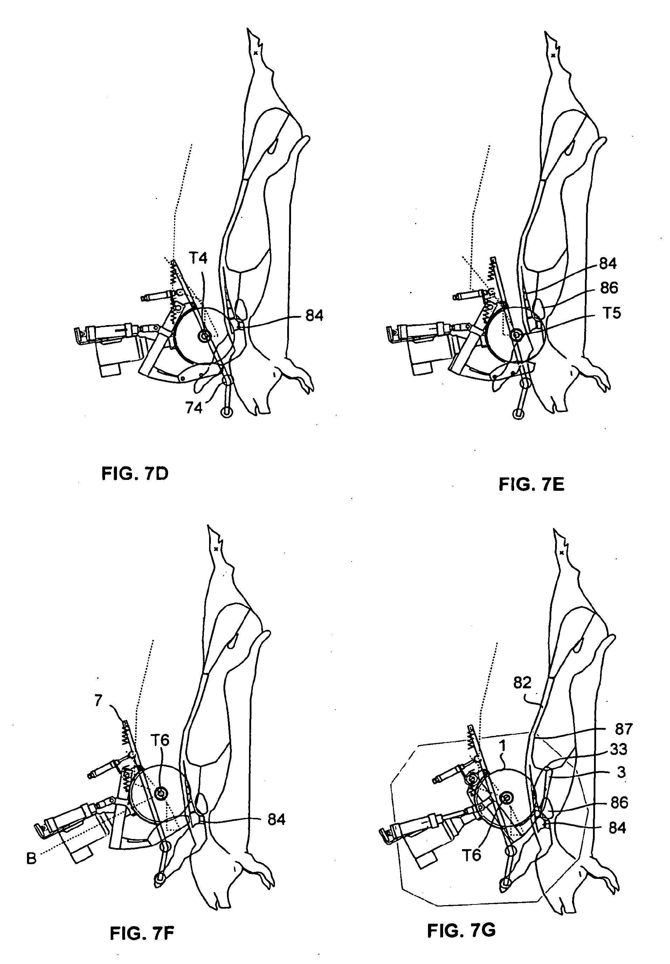

A partir de cette position T2, la lame 1 est entraînée en rotation. L'outil est avancé vers le bas et en direction de l'animal jusqu'à la position T3 illustrée à la figure 7C pour commencer la découpe de la partie centrale du sternum, sensiblement selon le plan de symétrie de l'animal. Dans cette position T3, le bord de coupe reste à distance du coeur, l'axe de rotation étant sensiblement à la hauteur du coeur. L'outil est ensuite descendu verticalement vers le bas jusqu'à la position T4 de la figure 7D, puis avancé horizontalement vers l'animal jusqu'à la position T5 de la figure 7E, afin de poursuivre la découpe de la partie avant du sternum tout en contournant le coeur. Lors de ce déplacement de la position T4 à T5, la lame circulaire découpe la gorge de l'animal et dégage ainsi la trachée. De la position T3 à la position T5, l'animal est maintenu centré par rapport à la lame, son plan médian sensiblement selon le plan de la lame, grâce aux bras de positionnement disposés entre les pattes avants et élastiquement en appui contre la mâchoire par la roue principale. Le coeur peut être coupé partiellement par la lame lors de ce trajet de T3 à T5.

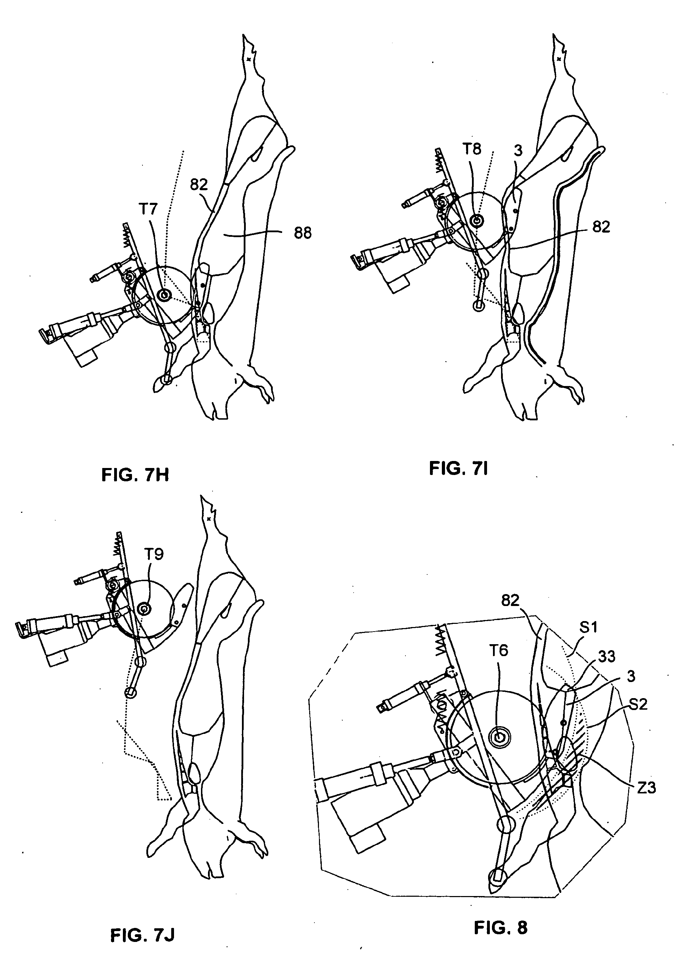

L'outil est ensuite remonté et écarté de l'animal, tout en maintenant la lame dans la découpe, jusqu'à la position T6 illustrée à la figure 7F. L'outil est incliné davantage par rapport à l'horizontal, l'axe B formant par exemple un angle d'environ 30° avec l'horizontal, et les bras de positionnement sont déplacés vers leur position rétractée par le vérin de commande. Le doigt est déplacé vers sa position active tel qu'illustré aux figures 7G et 8. Lors de ce déplacement, le doigt passe entre le coeur et le bord circulaire de la lame en poussant le coeur vers l'intérieur, et vient perforer par son extrémité libre 33 le péritoine 87. Sur la figure 8, la courbe S1 illustre le trajet de l'extrémité libre du doigt lors de son pivotement autour de l'axe C. Un tel axe de pivotement décalé par rapport à l'axe de la lame permet d'insérer le doigt dans la découpe sans ressortir la lame de la découpe et sans incliner excessivement l'outil. La courbe S2 illustre le trajet du doigt dans l'hypothèse d'un doigt articulé autour de l'axe de rotation de la lame, la zone hachurée Z3 entre les deux courbes S1 et S2 illustrant la zone gagnée par un axe de pivotement selon l'invention.

L'outil est ensuite reculé en remontant légèrement vers le haut jusqu'à la position T7 illustrée à la figure 7H, pour tendre la paroi de l'abdomen et ainsi protéger les viscères. L'outil est déplacé vers le haut jusqu'à la position T8 illustrée à la figure 7I pour découper la pointe du sternum jusqu'au xiphoïde et découper la paroi abdominale et le péritoine. Lors de ce déplacement, la paroi abdominale est tendue vers l'extérieur par le doigt. Le bord concave 421 de la deuxième barre 42 en vis-à-vis du bord de coupe permet d'éviter un blocage des os découpés du sternum entre la barre et la lame. L'outil est ensuite déplacé davantage vers le haut jusqu'à la position T9 illustrée à la figure 7J, l'outil sortant de l'animal lorsque la lame arrive au niveau de la zone de prédécoupe Z3.

L'outil qui se déplaçait en synchronisme avec l'avancement de l'animal depuis sa détection, est ramené en arrière parallèlement au convoyeur, de la position T9 jusqu'à la position T1, pour le traitement du prochain animal transporté par le convoyeur. L'outil sera avantageusement stérilisé entre le traitement de deux animaux, en le déplaçant de la position T9 vers une position intermédiaire non illustrée dans laquelle l'outil sera aspergé une solution de stérilisation. L'outil sera ensuite déplacé de cette position intermédiaire vers la position d'attente T1.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de découpe du sternum et de la paroi de l'abdomen d'un animal abattu suspendu par les pattes arrières, en particulier d'un porc, comprenant les étapes successives suivantes :
a) réalisation d'une découpe du sternum (84) au dessus du coeur (86), sensiblement selon le plan de symétrie de l'animal (8) au moyen d'une lame circulaire (1) d'un outil de découpe,
b) descente de la lame circulaire vers le bas pour poursuivre la découpe du sternum jusqu'à la trachée en contournant le coeur,
c) remontée de la lame circulaire dans la découpe réalisée aux étapes a) et b),
d) insertion d'un doigt (3) de l'outil de découpe entre le bord de coupe (11) de la lame circulaire et le coeur de l'animal, et perforation du péritoine (87) par l'extrémité libre (33) dudit doigt,
e) mise sous tension de la paroi abdominale (82) par ledit doigt en reculant l'outil de découpe, et
f) remontée de l'outil de découpe pour la découpe par la lame circulaire de la paroi abdominale mise sous tension par ledit doigt.

2. Outil de découpe de la paroi de l'abdomen et du sternum d'un animal suspendu par les pattes arrières pour la mise en oeuvre du procédé selon la revendication 1, **caractérisé en ce qu'**il comprend une lame circulaire (1) montée en rotation à une première extrémité longitudinale (21) d'un support (2), ledit support étant destiné à être fixé sur un système de déplacement par sa deuxième extrémité longitudinale (22), et un doigt (3) assemblé sur un bras de pivotement (4) monté pivotant sur ledit support autour d'un axe de pivotement (C) disposé entre la deuxième extrémité (22) du support et l'axe de rotation (A) de la lame circulaire, parallèlement et à distance de ce dernier, de sorte que ledit doigt soit disposé sensiblement selon le plan de la lame circulaire au-delà de son bord de coupe (11) et déplaçable par pivotement dudit bras de pivotement entre une position basse rétractée et une position haute active dans laquelle ledit doigt est apte à perforer le péritoine (87) de l'animal par son extrémité libre (33), avant l'opération de découpe de bas en haut de la paroi de l'abdomen par la lame circulaire, et à tendre la paroi de l'abdomen par son bord d'appui (31) en vis-à-vis du bord de coupe (11) de la lame lors de ladite opération de découpe de bas en haut.

3. Outil de découpe selon la revendication 2, **caractérisé en ce que** l'axe de pivotement (C) est situé au-delà du bord de coupe (11) de la lame circulaire (1).

4. Outil de découpe selon la revendication 2 ou 3, **caractérisé en ce que** l'axe de pivotement (C) est situé à distance de l'axe longitudinal (B) du support (2).

5. Outil de découpe selon l'une des revendications 2 à 4, **caractérisé en ce que** le bord d'appui (31) du doigt (3) est muni d'une fente longitudinale (32) apte à recevoir un secteur du bord de coupe (11) de la lame circulaire (1) dans la position haute active du doigt (3).

6. Outil de découpe selon l'une des revendications 2 à 5, **caractérisé en ce que** l'extrémité libre (33) du doigt est disposée au dessus de l'axe longitudinal (B) du support dans la position haute active du doigt (3).

7. Outil de découpe selon l'une des revendications 2 à 6, **caractérisé en ce que** le bras de pivotement (4) comprend une première barre (41) montée pivotante par une première extrémité sur le support (2) et s'étendant d'un côté de la lame (1) parallèlement au plan de la lame, et une deuxième barre (42), montée à la deuxième extrémité de la première barre, disposée sensiblement selon le plan de la lame et portant à son extrémité libre le doigt (3), ledit outil comprenant en outre des moyens de déplacement (6) agissant sur la première barre (41) pour déplacer automatiquement le doigt entre ses deux positions.

8. Outil de découpe selon la revendication 7, **caractérisé en ce que** la deuxième barre (42) présente un bord concave (421) venant en vis-à-vis du bord de coupe (11) de la lame dans la position haute active du doigt (3).

9. Outil de découpe selon l'une des revendications 2 à 8, **caractérisé en ce qu'**il comprend en outre des moyens de positionnement (7) comprenant deux bras de positionnement (71, 72) montés sur ledit support et aptes à venir entre les pattes avants (89) d'un animal pour les écarter et centrer l'animal par rapport au plan de la lame circulaire.

10. Dispositif de découpe de la paroi de l'abdomen et du sternum d'un animal suspendu par les pattes arrières, **caractérisé en ce qu'**il comprend un outil de découpe selon l'une des revendications 2 à 9 et un système de déplacement comprenant un robot de type six axes sur lequel est monté ledit outil de découpe.

## Claims

1. Method for cutting through the sternum and the abdominal wall of a slaughtered animal suspended by its hind legs, in particular a pig, comprising the following successive steps:
a) making a cut through the sternum (84) above the heart (86), substantially in the plane of symmetry of the animal (8), by means of a circular blade (1) of a cutting tool,
b) moving the circular blade downwards to continue cutting through the sternum as far as the trachea, bypassing the heart,
c) lifting the circular blade in the cut made in steps a) and b),
d) inserting a finger (3) of the cutting tool between the cutting edge (11) of the circular blade and the animal's heart, and perforating the peritoneum (87) via the free end (33) of said finger,
e) tensioning the abdominal wall (82) via said finger by pulling back the cutting tool, and
f) lifting the cutting tool to allow the circular blade to cut through the abdominal wall tensioned by said finger.

2. Tool for cutting through the abdominal wall and the sternum of an animal suspended by its hind legs, for implementing the method according to Claim 1, **characterized in that** it comprises a circular blade (1) mounted rotatably on a first longitudinal end (21) of a support (2), said support being designed to be fixed to a displacement system via its second longitudinal end (22), and a finger (3) assembled on a pivoting arm (4) mounted so as to pivot on said support about a pivot axis (C) arranged between the second end (22) of the support and the axis of rotation (A) of the circular blade, parallel to and at a distance from the latter, in such a way that said finger is arranged substantially in the plane of the circular blade beyond its cutting edge (11) and can be displaced by pivoting of said pivot arm between a retracted lower position and an active upper position in which said finger is able to perforate the peritoneum (87) of the animal via its free end (33), before the operation involving an upward cut through the abdominal wall by the circular blade, and to tension the abdominal wall via its bearing edge (31) opposite the cutting edge (11) of the blade during said upward cutting operation.

3. Cutting tool according to Claim 2, **characterized in that** the pivot axis (C) is situated beyond the cutting edge (11) of the circular blade (1).

4. Cutting tool according to Claim 2 or 3, **characterized in that** the pivot axis (C) is situated at a distance from the longitudinal axis (B) of the support (2).

5. Cutting tool according to one of Claims 2 to 4, **characterized in that** the bearing edge (31) of the finger (3) is provided with a longitudinal slit (32) which is able to receive a sector of the cutting edge (11) of the circular blade (1) in the active upper position of the finger (3).

6. Cutting tool according to one of Claims 2 to 5, **characterized in that** the free end (33) of the finger is arranged above the longitudinal axis (B) of the support in the active upper position of the finger (3).

7. Cutting tool according to one of Claims 2 to 6, **characterized in that** the pivoting arm (4) comprises a first bar (41) which is mounted so as to pivot via a first end on the support (2) and extends on one side of the blade (1) parallel to the plane of the blade, and a second bar (42) which is mounted at the second end of the first bar, is disposed substantially in the plane of the blade and, at its free end, supports the finger (3), said tool also comprising displacement means (6) that act on the first bar (41) in order to automatically move the finger between its two positions.

8. Cutting tool according to Claim 7, **characterized in that** the second bar (42) has a concave edge (421) that comes to lie opposite the cutting edge (11) of the blade in the active upper position of the finger (3).

9. Cutting tool according to one of Claims 2 to 8, **characterized in that** it additionally comprises positioning means (7) with two positioning arms (71, 72) that are mounted on said support and are able to come between the forelegs (89) of an animal in order to space them apart and to centre the animal with respect to the plane of the circular blade.

10. Device for cutting through the abdominal wall and sternum of an animal suspended by its hind legs, **characterized in that** it comprises a cutting tool according to one of Claims 2 to 9 and a system of displacement comprising a robot of the six-axle type on which said cutting tool is mounted.

## Patentansprüche

1. Verfahren zum Durchtrennen des Brustbeins und der Bauchdecke eines an den Hinterpfoten aufgehängten geschlachteten Tieres, insbesondere eines Schweins, umfassend die aufeinanderfolgenden Schritte:
a) Ausführen einer Durchtrennung des Brustbeins (84) über dem Herzen (86) im wesentlichen entlang der Symmetrieebene des Tieres (8) mittels eines Kreismessers (1) eines Schneidewerkzeugs,
b) Absenken des kreisrunden Messers nach unten, um die Durchtrennung des Brustbeins bis zur Trachea unter Umgehung des Herzens fortzuführen,
c) Anheben des Kreismessers im in Schritt a) und b) ausgeführten Schnitt,
d) Einführen eines Zapfens (3) des Schneidewerkzeugs zwischen der Schnittkante (11) des Kreismessers und dem Herzen des Tieres und Perforation des Bauchfells (87) mit dem freien Ende (33) des Zapfens,
e) Spannen der Bauchdecke (82) mit dem Zapfen durch Zurücksetzen des Schneidewerkzeugs, und
f) Anheben des Schneidewerkzeugs zum Durchtrennen der mit dem Zapfen gespannten Bauchdecke mittels des Kreismessers.

2. Werkzeug zum Durchtrennen der Bauchdecke und des Brustbeins eines mit den Hinterpfoten aufgehängten Tieres zum Durchführen des Verfahrens nach Anspruch 1, **dadurch gekennzeichnet, dass** es ein Kreismesser (1) enthält, das an einem ersten Längsende (21) eines Halters (2) drehbar gelagert ist, wobei der Halter dazu bestimmt ist, mit seinem zweiten Längsende (22) an eine Verstelleinrichtung befestigt zu werden, sowie einen Zapfen (3), der an einem Schwenkarm (4) montiert ist, der an dem Halter um eine Schwenkachse (C) verschwenkbar gelagert ist, die zwischen dem zweiten Ende (22) des Halters und der Drehachse (A) des Kreismessers parallel und im Abstand von letzterer angeordnet ist, so dass der Zapfen im wesentlichen in der Ebene des Kreismessers über seine Schneidkante (11) hinaus angeordnet und durch Verschwenken des Schwenkarms zwischen einer eingefahrenen unteren Stellung und einer aktiven oberen Stellung verstellbar ist, in welcher der Zapfen das Bauchfell (87) des Tieres mit seinem freien Ende (33) perforieren kann, bevor die Bauchdecke von unten nach oben mit dem Kreismesser durchtrennt wird, und die Bauchdecke mit seiner der Schneidkante (11) des Schneidmessers gegenüberliegenden Abstützkante (31) bei dem Schneidvorgang von unten nach oben spannen kann.

3. Schneidwerkzeug nach Anspruch 2, **dadurch gekennzeichnet, dass** die Schwenkachse (C) sich über die Schneidkante (11) des Kreismessers (1) hinaus befindet.

4. Schneidwerkzeug nach Anspruch 2 oder 3, **dadurch gekennzeichnet, dass** die Schwenkachse (C) im Abstand von der Längsachse (B) des Halters (2) liegt.

5. Schneidwerkzeug nach einem der Ansprüche 2 bis 4, **dadurch gekennzeichnet, dass** die Abstützkante (31) des Zapfens (3) mit einem Längsschlitz (32) versehen ist, der einen Sektor der Schneidkante (11) des Kreismessers (1) in der aktiven oberen Stellung des Zapfens (3) aufnehmen kann.

6. Schneidwerkzeug nach einem der Ansprüche 2 bis 5, **dadurch gekennzeichnet, dass** das freie Ende (33) des Zapfens über der Längsachse (B) des Halters in der aktiven oberen Stellung des Zapfens (3) angeordnet ist.

7. Schneidwerkzeug nach einem der Ansprüche 2 bis 6, **dadurch gekennzeichnet, dass** der Schwenkarm (4) eine erste Stange (41) enthält, die mit einem ersten Ende an dem Halter (2) verschwenkbar gelagert ist und sich auf einer Seite des Schneidmessers (1) parallel zur Ebene des Schneidmessers erstreckt, sowie eine zweite Stange (42), die an dem zweiten Ende der ersten Stange gelagert und im wesentlichen in der Ebene des Schneidmessers angeordnet ist und an ihrem freien Ende den Zapfen (3) trägt, wobei das Werkzeug ferner Verstellmittel (6) enthält, die auf die erste Stange (41) einwirken, um den Zapfen automatisch zwischen seinen beiden Stellungen zu verstellen.

8. Schneidwerkzeug nach Anspruch 7, **dadurch gekennzeichnet, dass** die zweite Stange (42) eine konkave Kante (421) aufweist, die der Schneidkante (11) des Schneidmessers in der aktiven oberen Stellung des Zapfens (3) gegenüber zu liegen kommt.

9. Schneidwerkzeug nach einem der Ansprüche 2 bis 8, **dadurch gekennzeichnet, dass** es ferner Positioniermittel (7) enthält, die zwei Positionierarme (71, 72) aufweisen, die an dem Halter montiert sind und zwischen die Vorderpfoten (89) eines Tiers gelangen können, um sie auseinander zu spreizen und das Tier bezüglich der Ebene des Kreismessers zu zentrieren.

10. Vorrichtung zum Durchtrennen der Bauchdecke und des Brustbeins eines an den Hinterpfoten aufgehängten Tieres, **dadurch gekennzeichnet, dass** sie ein Schneidwerkzeug nach einem der Ansprüche 2 bis 9 und eine Verstelleinrichtung mit einem sechsachsigen Roboter enthält, an dem das Schneidwerkzeug montiert ist.
